# EUROPEAN PATENT SPECIFICATION

(11) **EP 4 008 854 B1**
(45) Date of publication and mention of the grant of the patent: **28.05.2025**
(21) Application number: 21209635.8
(22) Date of filing: 22.11.2021
(51) Int. Cl.: E04G 21/32, F24S 25/615, E04D 13/10, E04D 13/12, E04D 3/366

(54) **SYSTEM FOR COVERING A ROOF**
SYSTEM ZUR ABDECKUNG EINES DACHES
SYSTÈME DE COUVERTURE DE TOIT

(30) Priority: 03.12.2020 SE 2051410
(43) Date of publication of application: 08.06.2022
(73) Proprietor: CWL Patent AB, 792 22 Mora (SE)
(72) Inventor: GRANSTRÖM, Linus, 792 92 Mora (SE)
(74) Representative: Ehrner & Delmar Patentbyrå AB

(56) References cited:
- EP-A1- 2 447 445
- EP-B1- 1 493 877
- SE-C2- 524 705
- SE-C2- 525 843
- US-A- 5 152 115
- US-B1- 6 269 596

## Description

### TECHNICAL FIELD

Aspects of the present invention relate to an attachment arrangement for a roof with elongated sheet metal panels. Further, aspects of the present invention relate to a system for covering a roof comprising roof panels.

### BACKGROUND

Many different roof covering and protecting materials and styles have conventionally been used for a number of years, such as slates, tiles, roofing felt and sheet metal panels. Sheet metal panels have conventionally been used mostly on larger buildings such as apartment buildings, industrial building and such, mainly due to the traditionally relatively high manufacturing cost as well as attachment cost, where the latter has been due to the rather labour-intensive work of manually folding the panels together with special tools, such as lock seam closers.

In recent years, developments have been made regarding attaching sheet metal panels without the use of tools. Some conventional solutions comprise folds that interlock with each other when the panels are joined to each other. The folds are also arranged with holes for fastening elements like screws that are hidden once the panels are interlocked with each other.

Other conventional developments comprise arranging the panels with photovoltaic properties where solar panels are integrated in the panel structure. For both these conventional developments, the idea is to make this type of roofs less expensive and easier to attach and thus expand the market also to smaller buildings, like villas and semi-detached houses.

Examples of known roof covering systems are disclosed in SE 524 705 C, US 5 152 115 A or EP 1 493 877 B.

### SUMMARY

The inventor of the present invention has found that the mounting of roof safety and access equipment, such as roof ladders, walkways and snow fences pose some difficulties with folded roofs. In general, the conventionally folded roofs provide possibilities for attaching such roof equipment to the folds, since the folds have enough strength due to being folded several times, wherein a fold can contain three or four layers of sheet metal pressed together. However, the inventor of the present invention has found that conventional solutions tend not to be sturdy enough. Also, when the panels comprise solar panels, it is important that the roof equipment does not negatively affect or damage the solar panels.

The inventor of the present invention has found that there is room for improvements in the attachment of roof safety and access equipment of such roofs.

An object of the invention is to provide a solution which mitigates or solves drawbacks and problems of conventional solutions.

The above and further objects are solved by the subject matter of the independent claim. Further advantageous embodiments of the invention can be found in the dependent claims.

According to a first aspect of the invention, the above mentioned and other objects are achieved with a system for covering a roof comprising a fixed roof structure, wherein the system comprises
elongated sheet metal roof panels to be placed adjacent to each other, the elongated sheet metal roof panels being provided with upwardly extending folds, and
an attachment arrangement an attachment arrangement for a roof provided with elongated sheet metal roof panels and for the attachment of the elongated sheet metal roof panels to the fixed roof structure of the roof,
wherein the attachment arrangement comprises one or more attachment plates arranged on top of folds of adjacent elongated sheet metal roof panels,
wherein each attachment plate comprises one or more first attachment points comprising one or more through-holes formed by the attachment plate,
wherein the attachment arrangement comprises one or more first fastening elements for the attachment of each atachment plate to the fixed roof structure via the one or more first attachment points,
wherein each attachment plate comprises one or more second attachment points comprising one or more through-holes formed by the attachment plate,
wherein the attachment arrangement comprises roof equipment,
wherein the attachment arrangement comprises one or more second fastening elements for the attachment of the roof equipment to the fixed roof structure via the one or more second attachment points, and
wherein the elongated sheet metal roof panels are placed adjacent to each other with a gap through which the first fastening element extends down and into the fixed roof structure.

An advantage of the system according to the first aspect is that an improved solution for attaching access and safety equipment of roofs covered with folded sheet metal panels is provided. An advantage of the system according to the first aspect is that attachment plates placed on the folds of the panels may be used both for anchoring the panels as well as for attaching roof equipment in a way that ensures that the roof is not affected negatively by the roof equipment. An advantage of the system according to the first aspect is that there is thus no need for extra attachment measures for the roof equipment, since no drilling or other mechanical work is needed on the panels as such, which also is an advantage if the panels are provided with photovoltaic properties.

According to one variant of the invention, there is provided an attachment arrangement for a roof with elongated sheet metal panels, which panels are arranged with upwards directed folds, comprising
- attachment plates arranged on top of folds of adjacent placed panels;
- first attachment points arranged on said attachment plates,
- first fastening elements for attachment of said attachment plates to the roof via said first attachment points,
- second attachment points arranged on said attachment plates,
- second fastening elements, and
- roof equipment, wherein said second fastening elements attaches said roof equipment to the roof via said second attachment points, and
wherein said first and second attachment points comprise through-going holes.

Expressed alternatively, according to one variant of the invention, an attachment arrangement for a roof with elongated sheet metal panels is provided, which panels are arranged with upwards directed folds. The attachment arrangement may comprise attachment plates arranged on top of folds of adjacent placed panels. First attachment points are arranged on the attachment plates, that are to cooperate with first fastening elements for attachment of the attachment plates to the roof via the first attachment points. Further, second attachment points are arranged on the attachment plates, that are to cooperate with second fastening elements for attachment of roof equipment to the roof via said second attachment points, wherein said first and second attachment points comprise through-going holes.

According to one variant of the invention, the first and second attachment points may be the same and the first and second fastening elements may be the same. Thus, with this solution, the same anchoring points and the same fastening elements are used for both anchoring the panels to the roof as well as for attaching the roof equipment.

Further, in order to facilitate alignment of the roof equipment in relation to the attachment plates, the through-hole may comprise an elongated hole, especially for the one or more second attachment points.

According to a further variant, the second attachment points and second fastening elements for attachment of roof equipment may comprise bolts and nuts. With this variant, the first fastening elements may comprise screws to be screwed into fixed structures of roof via the first attachment points, such as through-holes mentioned above. For the previous variants, the first and second fastening elements comprise screws to be screwed into fixed structures of said roof.

The roof equipment may comprise a bracket, an attachment element and/or a console configured for the attachment of walkways, snow fences, ridge and roof foot rails, guardrails. As an alternative, the roof equipment may comprise a bracket, an attachment element and/or a console configured for the attachment of ladders. When a bracket, or a console, is placed on top of the folds, it would be an advantage if the attachment plates have a length at least as long as the contact surface of the bracket, or console, to the roof, in order to distribute loads from the roof equipment and personnel using it along the folds as much as possible.

According to a further variant, the system could further comprise elongated covers to be placed on the folds between the attachment plates and the roof equipment. This will ensure that moist or debris cannot enter into the gap between the folds of adjacent panels.

In order to secure the roof equipment on the covers, the covers may be arranged with holes for the second fastening elements.

In order to further prevent moist of debris into the gap, a sealing element may be placed between the folds of adjacent roof panels.

These and other aspects of, embodiments of the invention and advantages with the present invention and embodiments thereof will become apparent from the following detailed description of the invention and from the accompanying drawings.

### BRIEF DESCRIPTION OF THE DRAWINGS

Embodiments of the invention will now be illustrated, for exemplary purposes, in more detail by way of embodiments and with reference to the enclosed drawings, where similar references are used for similar parts, in which:
Fig. 1 is a perspective view of a roof section with folded metal sheet panels provided with different types of roof equipment such as snow fences, walkways ladders etc.;
Figs. 2 and 3 are detailed views of the folds and attachment arrangement;
Figs. 4 and 5 are detailed views with one type of bracket of the roof equipment;
Fig. 6 shows one attachment solution of an elongated bracket;
Figs. 7 and 8 show a second attachment solution for an elongated bracket;
Figs. 9 and 10 show the bracket of Figs. 7 and 8 provided with a guide member for aligning the bracket with the folds; and
Figs. 11 and 12 show further variants of attachment plates to be used with the attachment arrangement.

### DETAILED DESCRIPTION

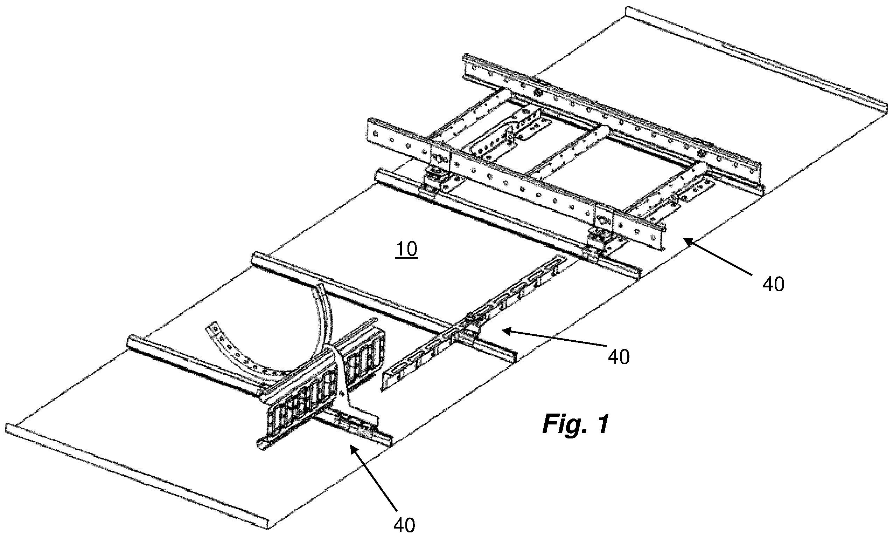

With reference to Figs. 1 to 12, embodiments of the attachment arrangement for a roof comprising elongated sheet metal panels 10, the sheet metal panels being arranged with upward directed folds, according to the first aspect are schematically illustrated.

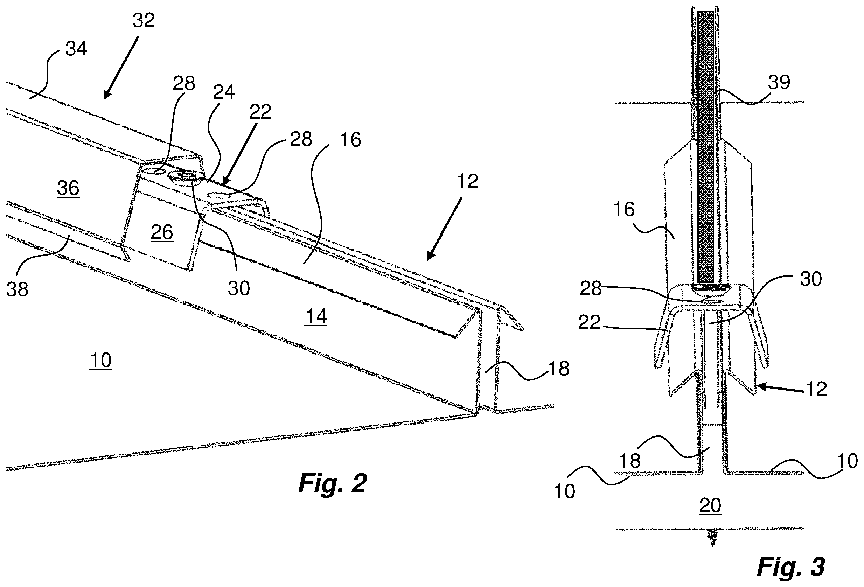

Further, embodiments of the system according to the second aspect are schematically illustrated. The system and the attachment arrangement may be used with sheet metal roof panels 10 illustrated in Fig. 1. Each roof panel of the roof panels 10 may comprise a flat elongated cover surface having folds 12 along two parallel edges of the panel, extending in the longitudinal direction of the panels. The panel may be covered with layers of protective material to prevent corrosion and to enhance the appearance of the roof. As an alternative, or in combination, the panel may be covered with material that have photovoltaic properties in order to obtain energy harvesting from sunlight. The folds 12 may have a first generally upwards extending section 14, in relation to the plane of the roof, followed by a second section 16 folded towards surface of the panel and with an inclination towards the roof surface, as seen in Fig. 2. When the panels are placed on a roof, for instance provided with transversally extending battens, they may be placed with a gap 18 between the upwards extending sections 14 of the folds. This will allow a certain freedom of movement between the panels, which for instance may be due to temperature fluctuations on the roof.

With reference to Figs. 1 to 12, the attachment arrangement includes one or more attachment plates 22, 22', 22" arranged on top of folds of adjacent sheet metal panels 10. The attachment plate 22, 22', 22" includes one or more first attachment points 28, 28', wherein the one or more first attachment points 28, 28' comprises/comprise one or more through-holes 28, 28' formed by the attachment plate 22, 22', 22". The attachment arrangement includes one or more first fastening elements 30 for the attachment of the attachment plate 22, 22', 22" to the roof via the one or more first attachment points 28, 28', such as through the one or more through-holes 28, 28' of the one or more first attachment points 28, 28'. The attachment plate 22, 22', 22" includes one or more second attachment points 28, 28', wherein the one or more second attachment points 28, 28' comprises/comprise one or more through-holes 28, 28' formed by the attachment plate 22, 22', 22". The attachment arrangement includes one or more second fastening elements 30, 54, 56. The attachment arrangement comprises roof equipment 40, 42, 50. The one or more second fastening elements 30, 54, 56 is/are configured to attach the roof equipment to the roof via the one or more second attachment points 28, 28', such as through the one or more through-holes 28, 28'of the one or more second attachment points 28, 28'.

With reference to Figs. 1 to 12, for some embodiments, the attachment plate 22, 22', 22" may be configured to attach one or more sheet metal panels 10 to the roof by way of the attachment of the attachment plate 22, 22', 22" to the roof. For some embodiments, the attachment plate 22, 22', 22" may be U-shaped, for example when viewed in the longitudinal direction of a fold of the sheet metal panel 10. The attachment plate 22, 22', 22" may be configured to embrace folds of adjacent sheet metal panels 10. For some embodiments, the attachment plate 22, 22', 22" may comprise a central section 24 and two side sections 26. The central section 24 may be described to be positioned between the two side sections 26. The attachment plate 22, 22', 22" may be configured to position folds of adjacent sheet metal panels 10 between the two side sections 26. The attachment plate 22, 22', 22", for example the U-shaped attachment plate 22, 22', 22", may be configured to open toward the roof. The two side sections 26 may be inclined toward the roof and/or toward the surface of the panels 10. An advantage of the attachment arrangement according to one or more of the embodiments disclosed above or below is that a further improved attachment of roof equipment to a roof is provided.

With reference to Figs. 1 to 12, for some embodiments, the one or more first fastening elements comprises/comprise one or more screws 30 to be screwed into fixed structures of the roof.

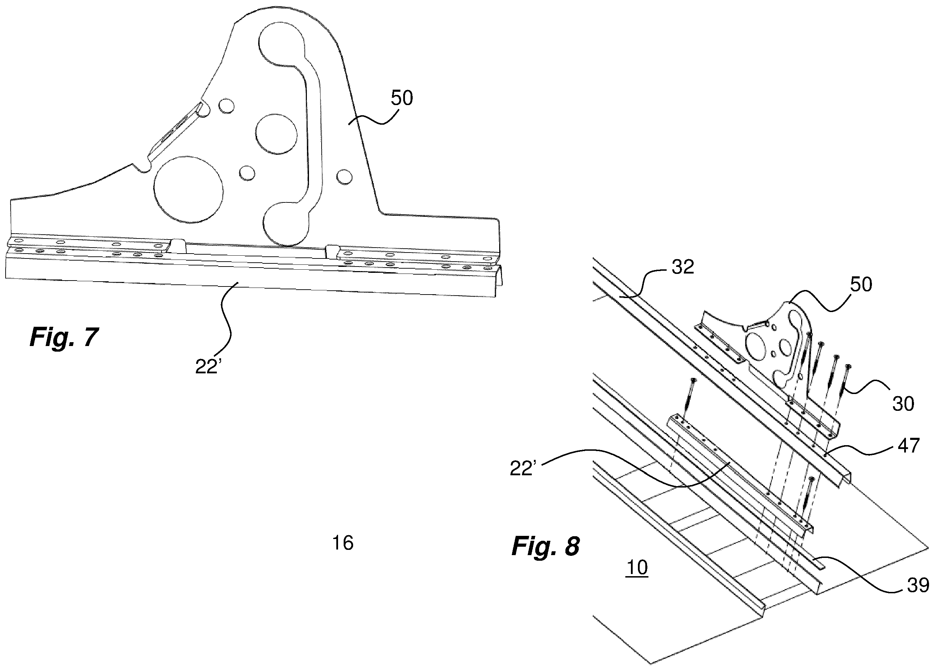

The panels are attached to fixed structures of the roof, such as roof battens 20, by attachment plates 22 placed over two adjacent folds. In this regard the attachment plates 22 may have a central flat section 24 and two side sections 26 inclined towards the surface of the panels. The central section 24 is provided with a number of attachment points in the form of through-holes 28, through which fastening elements 30, such as screws, may be introduced through the gap 18 between the folds and screwed into the battens below. The through-hole 28 may also be referred to as a though-going hole, or simply a hole. Also, the screws will ensure the gap 18 between adjacent panels. With reference to Figs. 2 and 8, in order to cover the folds and to ensure that moisture or debris cannot enter in the gap 18 between the panels, a sealing element 39, such as a strip of sealing material 39, may be placed in the gap 18, for example an expanding sealing foam tape. Then an elongated cover 32 is placed on top of the folds, Fig. 2. The cover 32 has a central flat section 34 and side sections 36.

The side sections 36 are inclined towards the surface of the panels. The outer areas of the side sections 36 are provided with end sections 38 that are inclined toward the folds. The bending line of the end section 38 coincides with the edges of the side sections 26 of the attachment plates 22 in order to hold the cover in place as seen in Fig. 2. The cover 32 is in this regard intended to be snap-fitted onto the attachment plates 22.

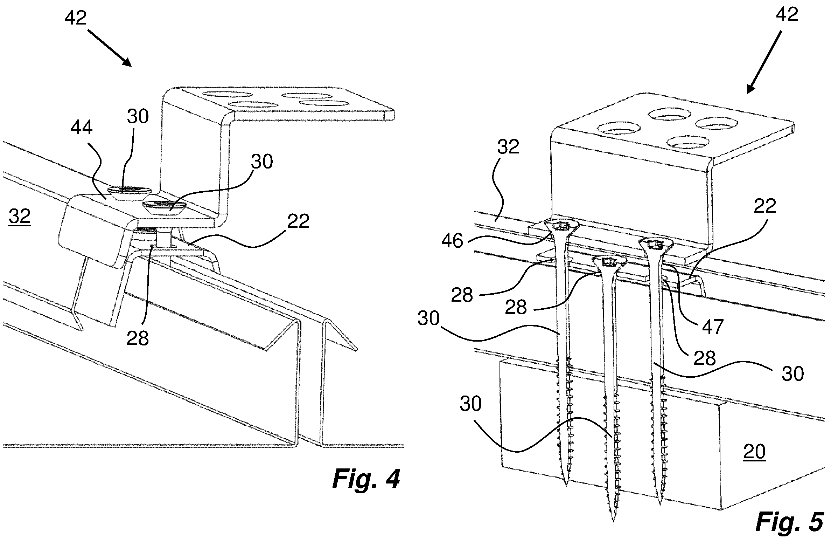

If roof equipment 40 is to be installed on the roof, such as snow guards, ladders, walkways, etc. as seen in Fig. 1, they need to be firmly attached to fixed structures of the roof, but they should not affect the folds of the panels or the panels themselves, in particular if they have photovoltaic properties. One solution is then to utilize the attachment plates 22 that hold the roof panels in place. For this purpose, the attachment plates 22 are provided with further through-holes 28. Attachment elements or brackets comprised in the roof equipment are used that are arranged to be placed on top of the covers. One type of attachment element 42 is shown in Figs. 4 and 5. It is arranged with an elongated plate-shaped section 44 that can distribute loads along a length of the cover. The section 44 is provided with a number of through-holes 46 with a through-hole pattern that matches the pattern of the further through-holes 28 on the attachment plates 22. The through-holes 46 of the section 44 should be aligned with the further through-holes 28 of the attachment plate 22. In this regard, the attachment plate 22 may be moved along the folds in order to obtain the correct position of the attachment elements 42 and thus the right position for roof equipment to be placed on the roof. With reference to Fig. 8, for some embodiments, the cover 32 may form one or more through-holes 47 for the one or more second fastening elements 30, 54. Through-holes 47 may be drilled in the central section 34 of the cover 32 with the through-hole pattern of the attachment element section 44 as template. The attachment element 42 is then placed on top of the cover 32 and fastened with appropriate fastening elements such as screws 48 through the attachment element section 44, the cover 32 and the attachment plate 22 and into the underlying battens 20 as seen in Fig. 5. The attachment element 42 may also be referred to as a console.

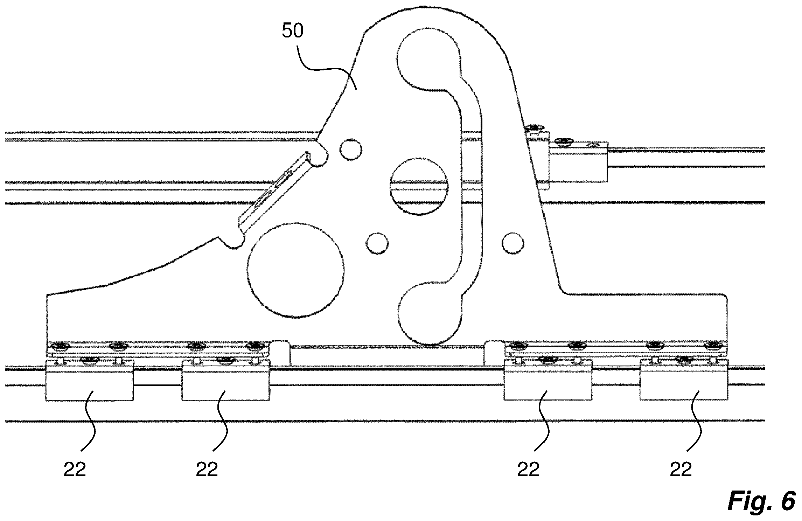

In Figs. 4-5 the attachment plates 22 are of a shorter length and it requires for instance at least two attachment plates if the attachment element is elongated. For instance, as seen in Fig. 6, with the cover removed for clarity, a bracket 50, such as an elongated bracket 50, with apertures and attachment points for walkways, snow fences or railings is shown with four attachment plates 22. Thus, all attachment plates may then need to be adjusted and aligned in order to match the through-hole pattern of the bracket 50. The bracket 50 may also be referred to as a console.

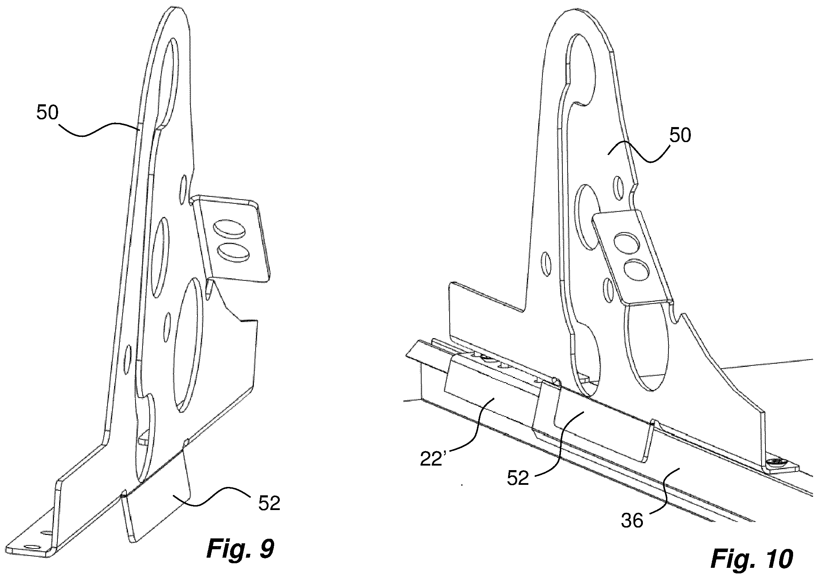

For such a situation, the attachment plate 22' may be longer, at least as long as the attachment element or bracket 50, for example as seen in Fig. 7. Further, the attachment plate 22' is arranged with a through-hole pattern corresponding to the through-hole pattern of the bracket 50. This solution will facilitate the adjustment of the attachment plate 22' in relation to the bracket 50 when attaching the bracket to the roof via holes in the cover as seen in Fig. 8. In that regard, when drilling the through-holes 47 in the cover 32 corresponding to the through-hole pattern of the bracket 50, the bracket 50 may be arranged with a downwardly extending guide section 52, Figs. 9 and 10, that when placed on the cover, will be in contact with a side surface of the cover, whereby the through-holes of the bracket 50 will be centred on the central flat section 34 of the cover 32. This ensures that the screws will fit in the gap 30 between the folds of the panels. The downwardly extending section 52 is preferably bent to follow the inclination of the side sections 36 of the cover 32 when seen in a cross-section, and as seen in Fig. 10. With reference to Fig. 7, for some embodiments, the attachment plate 22, 22', 22" may have a length, or a longitudinal extension, which is at least as long as the contact surface of the bracket 50 to the roof, or the contact surface between the bracket 50 and the roof.

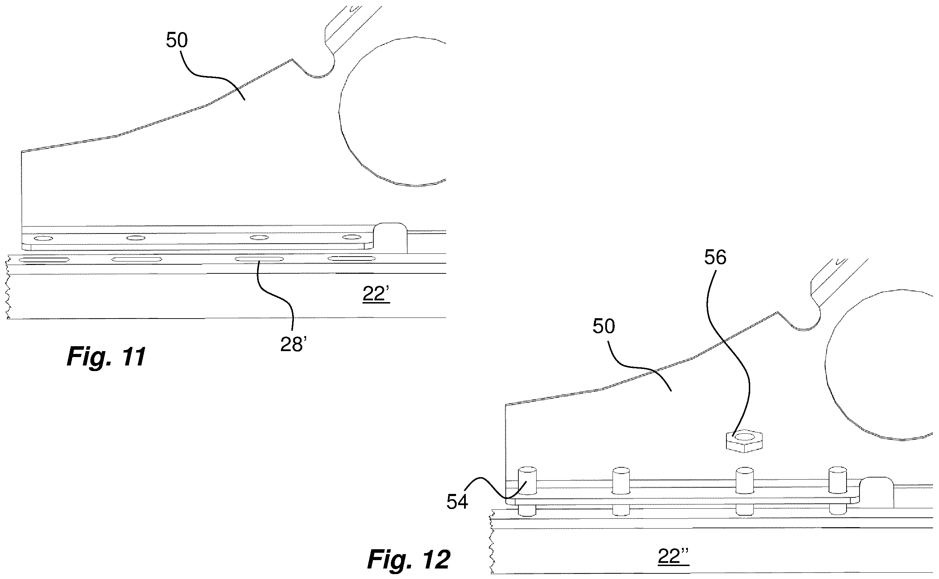

In this regard, with a longer attachment plate 22', it would be possible to have the through-holes 28' that correspond to the through-holes of the attachment element or bracket somewhat elongated as seen in Fig. 11, thus not requiring exact alignment between the attachment plate 22' and the attachment element or bracket 50. With this solution, it could be feasible to use self-drilling screws for attaching the bracket 50 without the need for pre-drilling the cover since the elongated holes allow a freer positioning of the bracket 50 in relation to the attachment plate or plates 22'.

As a further alternative, attachment plates could be used as described above for fastening the roof panels. Then further attachment plates are used in combination with the attachment elements or brackets. These further attachment elements do not need to be fastened to the roof before the cover is attached, but can be placed without fixation and are thus movable on the folds. This also facilitates the alignment between the attachment plates and the attachment elements.

As a further alternative, the attachment plates 22" may be arranged with attachment points in the form of both through-holes 28 for attachment to the roof as described earlier and with threaded bolts 54 extending upwards, Fig. 12. These bolts 54 are placed in a pattern that corresponds to the through-hole pattern of the brackets to be attached on the roof. After drilling the corresponding through-hole pattern in the cover, a bracket 50 may be attached to the bolts with appropriate nuts 56.

It is to be understood that the embodiment described above and shown in the drawings is to be regarded only as a non-limiting example of the invention and that it may be modified in many ways within the scope of the claims.

## Claims

1. A system for covering a roof comprising a fixed roof structure, wherein the system comprises
elongated sheet metal roof panels (10) to be placed adjacent to each other, the elongated sheet metal roof panels being provided with upwardly extending folds (12), and
an attachment arrangement for a roof provided with elongated sheet metal roof panels (10) and for the attachment of the elongated sheet metal roof panels (10) to the fixed roof structure of the roof,
wherein the attachment arrangement comprises one or more attachment plates (22, 22', 22") arranged on top of folds of adjacent elongated sheet metal roof panels (10),
wherein each attachment plate (22, 22', 22") comprises one or more first attachment points (28, 28') comprising one or more through-holes (28, 28') formed by the attachment plate (22, 22', 22"),
wherein the attachment arrangement comprises one or more first fastening elements (30) for the attachment of the attachment plate (22, 22', 22") to the fixed roof structure via the one or more first attachment points (28, 28'),
wherein each attachment plate (22, 22', 22") comprises one or more second attachment points (28, 28') comprising one or more through-holes (28, 28') formed by the attachment plate (22, 22', 22"),
wherein the attachment arrangement comprises roof equipment (40, 42, 50),
wherein the attachment arrangement comprises one or more second fastening elements (30, 54, 56) for the attachment of the roof equipment to the fixed roof structure via the one or more second attachment points (28, 28'),
**characterized in that**
the elongated sheet metal roof panels (10) are placed adjacent to each other with a gap (18) through which the first fastening element (30) extends down and into the fixed roof structure.

2. A system according to claim 1, wherein the attachment plate (22, 22', 22") is configured to attach one or more elongated sheet metal roof panels (10) to the roof by way of the attachment of the attachment plate (22, 22', 22") to the roof.

3. A system according to claim 1 or 2, wherein the attachment plate (22, 22', 22") is U-shaped and is configured to embrace folds of adjacent elongated sheet metal roof panels (10).

4. A system according to any one of the claims 1 to 3, wherein the attachment plate (22, 22', 22") comprises a central section (24) and two side sections (26), and wherein the attachment plate (22, 22', 22") is configured to position folds of adjacent elongated sheet metal roof panels (10) between the two side sections (26).

5. A system according to any one of the claims 1 to 4, wherein the first (28, 28') and second attachment points (28, 28') are the same, and wherein the first (30) and second fastening elements (30) are the same.

6. A system according to any one of the claims 1 to 5, wherein the through-hole comprise an elongated hole (28').

7. A system according to any one of the claims 1 to 6, wherein the one or more second attachment points and the one or more second fastening elements for the attachment of roof equipment comprise one or more bolts and one or more nuts (54, 56).

8. A system according to any one of the claims 1 to 7, wherein the first and second fastening elements comprise screws (30) to be screwed into fixed structures of said roof.

9. A system according any one of the claims 1 to 8, wherein the roof equipment comprise one or more brackets (50) configured for the attachment of one or more of the group of: a walkway; a snow fence; a ridge and roof foot rail; and a guardrail.

10. A system according to claim 9, wherein the bracket (50) is arranged with a guide section to be in contact with a side section of a fold of the roof for aligning the second fastening elements or first fastening elements in relation to the folds.

11. A system according to any one of the claims 1 to 10, wherein the roof equipment comprises one or more attachment elements (42) configured for the attachment of one or more ladders.

12. A system according to any one of the claims 1 to 11, wherein the system comprises elongated covers (36) to be placed on the folds (12) between the attachment plates (22, 22', 22") and the roof equipment (40, 42, 50).

13. A system according to any one of the claims 1 to 12, wherein the system comprises a sealing element (39) placed between the folds (12) of adjacent elongated sheet metal roof panels (10).

## Patentansprüche

1. System zum Decken eines Dachs, umfassend eine feste Dachstruktur, wobei das System Folgendes umfasst:
längliche Blechdachpaneele (10), die aneinander angrenzend zu platzieren sind, wobei die länglichen Blechdachpaneele mit sich aufwärts erstreckenden Falzen (12) versehen sind, und
eine Befestigungsanordnung für ein Dach, das mit länglichen Blechdachpaneelen (10) versehen ist, und für die Befestigung der länglichen Blechdachpaneele (10) an der festen Dachstruktur des Dachs,
wobei die Befestigungsanordnung eine oder mehrere Befestigungsplatte(n) (22, 22', 22") umfasst, die auf den Falzen angrenzender länglicher Blechdachpaneele (10) angeordnet ist/sind,
wobei jede Befestigungsplatte (22, 22', 22") einen oder mehrere erste Befestigungspunkt(e) (28, 28') umfasst, der/die eine oder mehrere Durchgangsbohrung(en) (28, 28') umfasst/umfassen, die durch die Befestigungsplatte (22, 22', 22") ausgebildet ist/sind,
wobei die Befestigungsanordnung ein erstes oder mehrere erste Fixierungselement(e) (30) zum Befestigen der Befestigungsplatte (22, 22', 22") an der festen Dachstruktur über den einen oder die mehreren ersten Befestigungspunkt(e) (28, 28') umfasst,
wobei jede Befestigungsplatte (22, 22', 22") einen oder mehrere zweite Befestigungspunkt(e) (28, 28') umfasst, der/die eine oder mehrere Durchgangsbohrung(en) (28, 28') umfasst/umfassen, die durch die Befestigungsplatte (22, 22', 22") ausgebildet ist/sind,
wobei die Befestigungsanordnung Dachausrüstung (40, 42, 50) umfasst,
wobei die Befestigungsanordnung ein zweites oder mehrere zweite Fixierungselement(e) (30, 54, 56) zum Befestigen der Dachausrüstung an der festen Dachstruktur über den einen oder die mehreren zweiten Befestigungspunkt(e) (28, 28') umfasst, **dadurch gekennzeichnet, dass**
die länglichen Blechdachpaneele (10) mit einem Spalt (18), durch den sich das erste Fixierungselement (30) abwärts und in die feste Dachstruktur erstreckt, aneinander angrenzend platziert sind.

2. System nach Anspruch 1, wobei die Befestigungsplatte (22, 22', 22") dazu ausgelegt ist, ein oder mehrere längliche Blechdachpaneel(e) (10) am Dach zu befestigen durch Befestigen der Befestigungsplatte (22, 22', 22") am Dach.

3. System nach Anspruch 1 oder 2, wobei die Befestigungsplatte (22, 22', 22") U-förmig ist und dazu ausgelegt ist, die Falze angrenzender länglicher Blechdachpaneele (10) zu umschließen.

4. System nach einem der Ansprüche 1 bis 3, wobei die Befestigungsplatte (22, 22', 22") einen Mittelabschnitt (24) und zwei Seitenabschnitte (26) umfasst und wobei die Befestigungsplatte (22, 22', 22") dazu ausgelegt ist, die Falze angrenzender länglicher Blechdachpaneele (10) zwischen den zwei Seitenabschnitten (26) zu positionieren.

5. System nach einem der Ansprüche 1 bis 4, wobei der erste (28, 28') und zweite Befestigungspunkt (28, 28') gleich sind und wobei das erste (30) und zweite Fixierungselement (30) gleich sind.

6. System nach einem der Ansprüche 1 bis 5, wobei die Durchgangsbohrung eine längliche Bohrung (28') umfasst.

7. System nach einem der Ansprüche 1 bis 6, wobei der eine oder die mehreren zweiten Befestigungspunkt(e) und das eine oder die mehreren zweiten Fixierungselement(e) zum Befestigen der Dachausrüstung einen oder mehrere Bolzen und eine oder mehrere Mutter(n) (54, 56) umfassen.

8. System nach einem der Ansprüche 1 bis 7, wobei das erste und zweite Fixierungselement Schrauben (30) umfassen, die in die festen Strukturen des Dachs zu schrauben sind.

9. System nach einem der Ansprüche 1 bis 8, wobei die Dachausrüstung eine oder mehrere Halterung(en) (50) umfasst, die zum Befestigen eines oder mehrerer der Elemente aus der folgenden Gruppe ausgelegt ist/sind: eines Laufstegs; eines Schneezauns; einer First- und Dachfußschiene und eines Geländers.

10. System nach Anspruch 9, wobei die Halterung (50) mit einem Führungsabschnitt in Kontakt mit einem Seitenabschnitt eines Falzes des Dachs angeordnet ist, um die zweiten Fixierungselemente oder die ersten Fixierungselemente in Bezug zu den Falzen auszurichten.

11. System nach einem der Ansprüche 1 bis 10, wobei die Dachausrüstung ein oder mehrere Befestigungselement (e) (42) umfasst, das/die zum Befestigen einer oder mehrerer Leiter(n) ausgelegt ist/sind.

12. System nach einem der Ansprüche 1 bis 11, wobei das System längliche Abdeckungen (36) umfasst, die auf den Falzen (12) zwischen den Befestigungsplatten (22, 22', 22") und der Dachausrüstung (40, 42, 50) zu platzieren sind.

13. System nach einem der Ansprüche 1 bis 12, wobei das System ein Dichtungselement (39) umfasst, das zwischen den Falzen (12) angrenzender länglicher Blechdachpaneele (10) platziert ist.

## Revendications

1. Système pour couvrir un toit comprenant une structure de toit fixe, dans lequel le système comprend des panneaux de toit en tôle allongés (10) destinés à être placés de façon adjacentes les uns aux autres, les panneaux de toit en tôle allongés étant pourvus de plis s'étendant vers le haut (12), et
un agencement d'attache pour un toit pourvu de panneaux de toit en tôle allongés (10) et pour l'attache des panneaux de toit en tôle allongés (10) à la structure de toit fixe du toit,
dans lequel l'agencement d'attache comprend une ou plusieurs plaques d'attache (22, 22', 22") agencées pardessus des plis de panneaux de toit en tôle allongés adjacents (10),
dans lequel chaque plaque d'attache (22, 22', 22") comprend un ou plusieurs premiers points d'attache (28, 28') comprenant un ou plusieurs trous traversants (28, 28') formés par la plaque d'attache (22, 22', 22"),
dans lequel l'agencement d'attache comprend un ou plusieurs premiers éléments de fixation (30) pour l'attache de la plaque d'attache (22, 22', 22") à la structure de toit fixe par l'intermédiaire de l'un ou des plusieurs premiers points d'attache (28, 28'),
dans lequel chaque plaque d'attache (22, 22', 22") comprend un ou plusieurs seconds points d'attache (28, 28') comprenant un ou plusieurs trous traversants (28, 28') formés par la plaque d'attache (22, 22', 22"), dans lequel l'agencement d'attache comprend des équipements de toit (40, 42, 50),
dans lequel l'agencement d'attache comprend un ou plusieurs seconds éléments de fixation (30, 54, 56) pour l'attache des équipements de toit à la structure de toit fixe par l'intermédiaire de l'un ou des plusieurs seconds points d'attache (28, 28'), **caractérisé en ce que**
les panneaux de toit en tôle allongés (10) sont placés de façon adjacente les uns aux autres avec un espace (18) à travers lequel le premier élément de fixation (30) s'étend vers le bas et dans la structure de toit fixe.

2. Système selon la revendication 1, dans lequel la plaque d'attache (22, 22', 22") est configurée pour attacher un ou plusieurs panneaux de toit en tôle allongés (10) au toit par le biais de l'attache de la plaque d'attache (22, 22', 22") au toit.

3. Système selon la revendication 1 ou 2, dans lequel la plaque d'attache (22, 22', 22") est en forme de U et est configurée pour embrasser des plis de panneaux de toit en tôle allongés adjacents (10).

4. Système selon l'une quelconque des revendications 1 à 3, dans lequel la plaque d'attache (22, 22', 22") comprend une section centrale (24) et deux sections latérales (26), et dans lequel la plaque d'attache (22, 22', 22") est configurée pour positionner des plis de panneaux de toit en tôle allongés adjacents (10) entre les deux sections latérales (26).

5. Système selon l'une quelconque des revendications 1 à 4, dans lequel les premiers (28, 28') et seconds (28, 28') points d'attache sont les mêmes, et dans lequel les premier (30) et second (30) éléments de fixation sont les mêmes.

6. Système selon l'une quelconque des revendications 1 à 5, dans lequel le trou traversant comprend un trou allongé (28').

7. Système selon l'une quelconque des revendications 1 à 6, dans lequel l'un ou les plusieurs seconds points d'attache et l'un ou les plusieurs seconds éléments de fixation pour l'attache d'équipements de toit comprennent un ou plusieurs boulons et un ou plusieurs écrous (54, 56).

8. Système selon l'une quelconque des revendications 1 à 7, dans lequel les premiers et seconds éléments de fixation comprennent des vis (30) destinées à être vissées dans des structures fixes dudit toit.

9. Système selon l'une quelconque des revendications 1 à 8, dans lequel les équipements de toit comprennent un ou plusieurs supports (50) configurés pour l'attache d'un ou plusieurs du groupe de : une passerelle ; un pare-neige ; une alarme au pied pour faîte et toit ; et un garde-corps.

10. Système selon la revendication 9, dans lequel le support (50) est agencé avec une section guide destinée à être en contact avec une section latérale d'un pli du toit pour aligner les seconds éléments de fixation ou les premiers éléments de fixation relativement aux plis.

11. Système selon l'une quelconque des revendications 1 à 10, dans lequel les équipements de toit comprennent un ou plusieurs éléments d'attache (42) configurés pour l'attache d'une ou de plusieurs échelles.

12. Système selon l'une quelconque des revendications 1 à 11, dans lequel le système comprend des couvertures allongées (36) destinées à être placées sur les plis (12) entre les plaques d'attache (22, 22', 22") et les équipements de toit (40, 42, 50).

13. Système selon l'une quelconque des revendications 1 à 12, dans lequel le système comprend un élément d'étanchéité (39) placé entre les plis (12) de panneaux de toit en tôle allongés adjacents (10).
